(19) Europäisches Patentamt
European Patent Office
Office européen des brevets

(11) Veröffentlichungsnummer: **0 685 514 A1**

(12) # EUROPÄISCHE PATENTANMELDUNG

(21) Anmeldenummer: **95107792.4**

(22) Anmeldetag: **22.05.95**

(51) Int. Cl.⁶: **C08K 3/30**, C08K 13/02, C08L 67/02, //(C08K13/02,3:30, 3:22,5:00)

(30) Priorität: **03.06.94 DE 4419573**
**24.04.95 DE 19514949**

(43) Veröffentlichungstag der Anmeldung:
**06.12.95 Patentblatt 95/49**

(84) Benannte Vertragsstaaten:
**DE FR GB IT NL**

(71) Anmelder: **BAYER AG**

**D-51368 Leverkusen (DE)**

(72) Erfinder: **Magerstedt, Herbert**
**Hölderlinstrasse 16**
**D-47445 Moers (DE)**
Erfinder: **Sarabi, Bahman, Dr.**
**Oelhausenweg 55a**
**D-47803 Krefeld (DE)**

(54) **Formmassen auf Basis Polyalkylenterephthalat.**

(57) Thermoplastische Formmassen, enthaltend
A) 30 bis 99,5 Gew.-Teile Polyalkylenterephthalat,
B) 0,5 bis 4,5 Gew.-Teile Calciumsulfat
C) 0 bis 40 Gew.-Teile Füll- und Verstärkungsstoffe, verschieden von Komponente B, und gegebenenfalls
D) eine Flammschutzmittelkombination aus
D.1) 0 bis 18 Gew.-Teile halogenhaltige Flammschutzmittel und
D.2) 0 bis 8 Gew.-Teile Antimonverbindungen,
wobei jeweils gegebenenfalls bis zu 20 Gew.-Teile Polyalkylenterephthalat durch aromatisches Polycarbonat und/oder kautschukelastisches Polymerisat mit einer Glasübergangstemperatur von < -10 °C und/oder bis zu 6 Gew.-Teile Polyolefin ersetzt werden kann.

EP 0 685 514 A1

Die Erfindung betrifft Calciumsulfat-haltige thermoplastische Formmassen auf der Basis von Polyalkylenterephthalat, gegebenenfalls aromatischem Polycarbonat, gegebenenfalls kautschukelastischem Polymerisat, gegebenenfalls Glasfasern, gegebenenfalls Polypropylen und gegebenenfalls Flammschutzadditiven, sowie aus diesen thermoplastischen Formmassen hergestellte Formkörper. Aus den thermoplastischen Formmassen hergestellte Formkörper zeigen eine hohe Kriechstromfestigkeit und bei Zusatz von Flammschutzadditiven eine reduzierte Nachbrennzeit bei einer ebenfalls hohen Kriechstromfestigkeit ohne Schädigung der thermoplastischen Matrix.

DE-OS 2 524 121 beschreibt Polybutylenterephthalat-Formmassen mit verbesserter Kriechstromfestigkeit, die 5 bis 60 Gew.-% Calcium- und/oder Bariumsulfat, gegebenenfalls Füllstoffe wie Glasfasern enthalten. Flammschutzmittel werden allgemein als Zusätze erwähnt. In den Beispielen wird $CaSO_4 \cdot 1/2 H_2O$ als Zusatzstoff zu PBT genannt.

Im Gegensatz dazu ist der Gegenstand der vorliegenden Ammeldung auf Polyalkylenterephthalat-Formmassen, gegebenenfalls Polycarbonat, Pfropfpolymerisat, die bis zu 4,5 Gew.-Teile Calciumsulfat und Flammschutzmittel gerichtet. Die vorliegenden Formmassen zeigen neben einer guten Kriechstromfestigkeit ein ausgezeichnetes Nachbrennverhalten.

EP-A 65 932 beschreibt thermoplastische Polyester-Formmassen, die Magnesiumsulfat enthalten.

US-P 4 284 550 beschreibt Formmassen aus Polybutylenterephthalat, einer organischen Halogenverbindung und Synergisten, z.B. Antimonoxid als Flammschutzmittel, anorganischer Verstärkungsstoff und gegebenenfalls einem Polyvinylacetat, wobei die Mischung 5 bis 100 Gew.-Teile Calciumsulfat enthält. Dieses Patent lehrt, daß, falls die Menge an Calciumsulfat Kleiner als 5 Gew.-Teile ist, keine befriedigenden Werte bezüglich der Nachglühzeit erreicht werden.

Wie beispielsweise aus US-P 4 845 146 bekannt ist, können mit Hydraten von anorganischen Metallverbindungen, z.B. Dolomit, diese als anorganischer Flammschutz verwendet werden. Jedoch werden erst durch den Zusatz von halogenierten Kohlenwasserstoffen UL 94-V1- und VO-Ergebnisse erzielt.

Ferner ist aus US-P 5 221 781 bekannt, daß sich Kunststoffe wie Polypropylen, Polyethylen mit z.B. Aluminiumhydroxid, Magnesiumhydroxid, hydratisiertem Talkum flammgeschützt einstellen lassen. Ein Hinweis auf eine Verbesserung der Kriechstromfestigkeit kann nicht entnommen werden.

US-P 4 401 784 ist zu entnehmen, daß durch Halogene flammgeschützte Kunststoffe wie Polybutylenterephthalat durch den Zusatz von Dolomit eine niedrige Kriechstromfestigkeit erreichen mit guter flammschützender Wirkung. Nicht flammgeschützte Polybutylenterephthalate mit Dolomit erzielen eine hohe Kriechstromfestigkeit.

Die Aufgabe der vorliegenden Erfindung ist, eine thermoplastische Formmasse auf Basis Polyalkylenterephthalat bereitzustellen, wobei die daraus erhältlichen Formkörper oder Formteile sich durch eine hohe Kriechstromfestigkeit, im Falle der flammgeschützten Formmasse durch eine hohe Kriechstromfestigkeit bei einer gleichzeitig reduzierten Nachbrennzeit und durch ein gutes Eigenschaftsprofil ohne Schädigung der Matrix auszeichnen.

Es wurde gefunden, daß mit einem Polyalkylenterephthalat, welches mit Calciumsulfat ausgestattet ist, eine hohe Kriechstromfestigkeit ohne Schädigung der thermoplastischen Matrix und hohe Elastizitätsmoduli erzielt werden und daß mit einem flammgeschützten Polyalkylenterephthalat, welches mit Calciumsulfat ausgestattet ist, eine hohe Kriechstromfestigkeit und einer gleichzeitig reduzierten Nachbrennzeit ohne Schädigung der thermoplastischen Matrix erzielt wird, wobei bei Zusatz von Polyolefin zu Calciumsulfat-haltigen Formmassen eine weitere Verbesserung der Kriechstromfestigkeit zu verzeichnen ist.

Gegenstand der vorliegenden Erfindung sind thermoplastische Formmassen, enthaltend

A) 30 bis 99,5, vorzugsweise 35 bis 95,5, insbesondere 40 bis 85 Gew.-Teile Polyalkylenterephthalat,

B) 0,5 bis 4,5, vorzugsweise 1 bis 4, insbesondere 2 bis 4 Gew.-Teile Calciumsulfat

C) 0 bis 40 Gew.-Teile Füll- und Verstärkungsstoffe, verschieden von Komponente B, und gegebenenfalls

D) eine Flammschutzmittelkombination aus

D.1) 0 bis 18 Gew.-Teile halogenhaltige Flammschutzmittel und

D.2) 0 bis 8 Gew.-Teile Antimonverbindungen,

wobei jeweils gegebenenfalls bis zu 20 Gew.-Teile Polyalkylenterephthalat durch aromatisches Polycarbonat und/oder kautschukelastisches Polymerisat mit einer Glasübergangstemperatur von $< -10\,°C$ und/oder bis zu 6 Gew.-Teile Polyolefine ersetzt werden kann.

Die Summe aller Gewichtsteile der Komponenten addiert sich zu 100.

**Komponente A**

Polyalkylenterephthalate im Sinne der Erfindung sind Reaktionsprodukte aus aromatischen Dicarbonsäuren oder ihren reaktionsfähigen Derivaten (z.B. Dimethylestern oder Anhydriden) und aliphatischen, cycloaliphatischen oder araliphatischen Diolen und Mischungen dieser Reaktionsprodukte.

Bevorzugte Polyalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 ff, Karl-Hanser-Verlag, München 1973).

Bevorzugte Polyalkylenterephthalate enthalten mindestens 80, vorzugsweise 90 Mol-%, bezogen auf die Dicarbonsäurekomponente, Terephthalsäurereste und mindestens 80, vorzugsweise mindestens 90 Mol-%, bezogen auf die Diolkomponente, Ethylenglykol- und/oder butandiol-1,4-reste.

Die bevorzugten Polyalkylenterephthalate können neben Terephthalsäureresten bis zu 20 Mol-% Reste anderer aromatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Adipin-, Sebacin-, Azelain-, Cyclohexandiessigsäure.

Die bevorzugten Polyalkylenterephthalate können neben Ethylenglykol- bzw. Butandiol-1,4-Resten bis zu 20 Mol-% anderer aliphatischer Diole mit 3 bis 12 C-Atomen oder cycloaliphatischer Diole mit 6 bis 21 C-Atomen enthalten, z.B. Reste von Propandiol-1,3, 2-Ethylenpropandiol-1,3, Neopentylglykol, Pentandiol-1,5, Hexandiol-1,6, Cyclohexandimethanol-1,4, 3-Methylpentandiol-2,4, -Methylpentandiol-2,4, 2,2,4-Trimethylpentandiol-1,3 und 1,6,2-Ethylhexandiol-1,3, 2,2-Diethylpropandiol-1,3, Hexandiol-2,5, 1,4-Di-($\beta$-hydroxyethoxy)-benzol, 2,2-bis-(3-$\beta$-hydroxyethoxyphenyl)-propan und 2,2-bis-(4-hydroxypropoxyphenyl)propan (DE-OS 24 07 674, 24 07 776, 27 15 932).

Die Polyalkylenterephthalate können durch Einbau relativ Kleiner Mengen 3- oder 4-wertiger Alkohole oder 3- oder 4-basischer Carbonsäuren, wie sie z.B. in der DE-OS 1 900 270 und der US-PS 3 692 744 beschrieben sind, verzweigt werden. Beispiele für bevorzugte Verzweigungsmittel sind Trimesinsäure, Trimellitsäure, Trimethylolethan und -propan und Pentaerythrit.

Es ist ratsam, nicht mehr als 1 Mol-% des Verzweigungsmittels, bezogen auf die Säurekompomente, zu verwenden.

Besonders bevorzugt sind Polyalkylenterephthalate, die allein aus Terephthalsäsure und deren reaktionsfähigen Derivaten (z.B. Dialkylestern) und Ethylenglykol und/oder Butandiol-1,4 hergestellt worden sind (Polyethylen und Polybutylenterephalat), und Mischungen dieser Polyalkylenterephthalate.

Bevorzugte Polyalkylenterephthalate sind auch Copolyester, die aus mindestens zwei der oben genannten Säurekomponenten und/oder aus mindestens zwei der oben genannten Alkoholkomponenten hergestellt sind, besonders bevorzugte Copolyester sind Poly-(ethylenglykol/butandiol-1,4)-terephthalate.

Die als Komponente A vorzugsweise verwendeten Polyalkylenterephthalate besitzen im allgemeinen eine Intrinsic-Viskosität von ca. 0,5 bis 1,5 dl/g, vorzugsweise 0,5 bis 1,3 dl/g, jeweils gemessen in Phenol/o-Dichlorbenzol (1:1 Gew.-Teile) bei 25 °C.

Bis zu 20 Gew.-Teile Polyalkylenterephthalat können durch aromatisches Polycarbonat ersetzt werden.

Erfindungsgemäß geeignete, thermoplastische, aromatische Polycarbonate sind solche auf Basis der Diphenole der Formel (I)

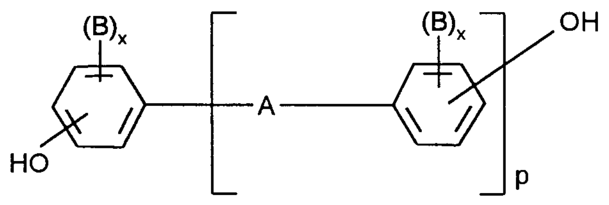

(I)

worin

- A eine Einfachbindung, $C_1$-$C_5$-Alkylen, $C_2$-$C_5$-Alkyliden, $C_5$-$C_6$-Cycloalkyliden, -S- oder -$SO_2$-,
- B Chlor, Brom
- x 0, 1 oder 2 und
- p 1 oder 0 sind

oder alkylsubstituierte Dihydroxyphenylcycloalkane der Formel (II),

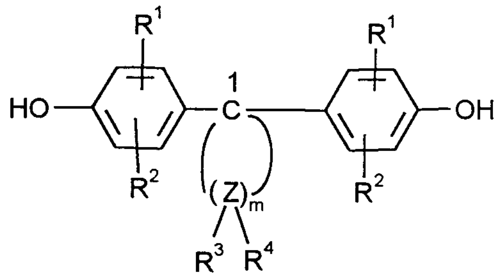

(II)

worin

- $R^1$ und $R^2$ unabhängig voneinander Wasserstoff Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl,
- m eine ganze Zahl von 4 bis 7, bevorzugt 4 oder 5,
- $R^3$ und $R^4$ für jedes Z individuell wählbar, unabhängig voneinander Wasserstoff oder $C_1$-$C_6$-Alkyl

und

- Z Kohlenstoff bedeuten, mit der Maßgabe, daß an mindestens einem Atom Z $R^3$ und $R^4$ gleichzeitig Alkyl bedeuten.

Geeignete Diphenole der Formel (I) sind z.B. Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, 2,2-Bis-(3-chlor-4-hydroxyphenyl)-cyclohexan, 2,2-Bis-(3-chlor-4-hydroxyphenyl)-propan, 2,2-Bis-(3,5-dibrom-4-hydroxyphenyl)-propan.

Bevorzugte Diphenole der Formel (I) sind 2,2-Bis-(4-hydroxyphenyl)-propan, 2,2-Bis-(3,5-dichlor-4-hydroxyphenyl)-propan und 1,1-Bis-(4-hydroxyphenyl)-cyclohexan.

Bevorzugte Diphenole der Formel (II) sind 1,1-Bis-(4-hydroxyphenyl)-3,3-dimethylcyclohexan, 1,1-Bis-(4-hydroxyphenyl)-3,3,5-trimethylcyclohexan und 1,1-Bis-(4-hydroxyphenyl)-2,4,4-trimethyl-cyclopentan.

Erfindungsgemäß geeignete Polycarbonate sind sowohl Homopolycarbonate als auch Copolycarboante.

Es kann auch eine Mischung der vorstehend definierten thermoplastischen Polycarbonate eingesetzt werden.

Die aromatischen Polycarbonate können nach bekannten Verfahren hergestellt werden, z.B. durch Schmelzumesterung eines entsprechenden Bisphenols mit Diphenylcarbonat und in Lösung aus Bisphenolen und Phosgen. Die Lösung kann homogen sein (Pyridinverfahren) oder heterogen (Zweiphasengrenzflächenverfahren) (vgl. H. Schnell, "Chemistry and Physics of Polycarbonates", Polymer Reviews, Vol. IX, S. 33 ff, Intersciencs Publ. 1964). Das Molekulargewicht kann dabei in bekannter Weise durch eine entsprechende Menge an bekannten Kettenabbrechern eingestellt werden. Geeignete Kettenabbrecher sind z.B. Phenol, p-Chlorphenol, p-tert.-Butylphenol oder 2,4,6-Tribromphenol, aber auch langkettige Alkylphenole gemäß DE-OS 2 842 005 oder Monoalkylphenol bzw. Dialkylphenole mit insgesamt 8 bis 20 C-Atomen in den Alkylsubstituenten (DE-OS 3 506 472) wie 3,5-di-tert.-Butylphenol, p-iso-Octylphenol, p-tert.-Octylphenol, p-Dodecylphenol und 2-(3,5-Dimethyl-heptyl)-phenol und 4-(3,5-Dimethyl-heptyl)-phenol.

Die Menge an Kettenabbrechern beträgt im allgemeinen zwischen 0,5 und 10 Mol.-%, bezogen auf die Summe der jeweils eingesetzten Diphenole der Formeln (II) und/oder (III).

Die aromatischen Polycarbonate besitzen in der Regel mittlere Molekulargewichte $\overline{M}_w$ von ca. 10 000 bis 200 000, vorzugsweise 20 000 bis 80 000 (ermittelt durch Gelchromatographie nach vorheriger Eichung).

Die erfindungsgemäß geeigneten Polycarbonate A können in bekannter Weise verzweigt sein, und zwar vorzugsweise durch den Einbau von 0,05 bis 2 Mol-%, bezogen auf die Summe der eingesetzten Diphenole, an drei- oder mehr als dreifunktionellen Verbindungen, z.B. solchen mit drei oder mehr phenolischen Gruppen.

Copolycarbonate im Sinne der Erfindung sind ferner Polydiorganosiloxan-Polycarbonat-Blockcopolymere mit mittlerem Molekulargewicht $\overline{M}_w$ von ca. 10 000 bis 200 000, vorzugweise 20 000 bis 80 000 (ermittelt durch Gelchromatographie nach vorheriger Eichung) und mit einem Gehalt an aromatischen Carbonatstruktureinheiten von etwa 75 bis 97,5 Gew.-%, bevorzugt 85 bis 97 Gew.-% und einem Gehalt an Polydiorganosiloxanstruktureinheiten von etwa 25 bis 2,5 Gew.-%, bevorzugt 15 bis 3 Gew.-%, wobei die Blockcopolymeren ausgehend von $\alpha,\omega$-Bishydroxyaryloxyendgruppen-haltigen Polydiorganosiloxanen mit einem Polymerisationsgrad $P_n$ von 5 bis 100, bevorzugt 20 bis 80, hergestellt werden.

Die Polydiorganosiloxan-Polycarbonat-Blockpolymeren können auch eine Mischung aus Polydiorganosiloxan-Polycarbonat-Blockpolymeren mit üblichen polysiloxanfreien, thermoplastischen Polycarbonaten sein, wobei der Gesamtgehalt an Polydiorganosiloxanstruktureinheiten in dieser Mischung ca. 2,5 bis 25 Gew.-% beträgt.

Solche Polydiorganosiloxan-Polycarbonat-Blockcopolymere sind dadurch gekennzeichnet, daß sie in der Polymerkette einerseits aromatische Carbonstruktureinheiten (1) und andererseits Aryloxyendgruppenhaltige Polydiorganosiloxane (2) enthalten,

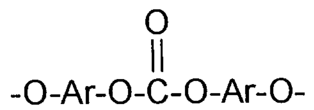

(1)

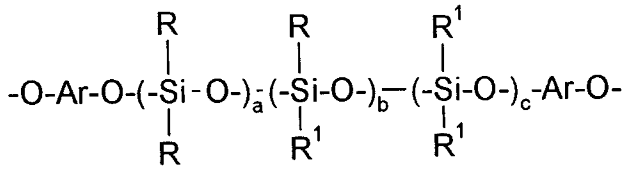

(2)

worin

| | |
|---|---|
| Ar | gleiche oder verschiedene Arylreste aus Diphenolen sind und |
| R und $R^1$ | gleich oder verschieden sind und lineares Alkyl, verzweigtes Alkyl, Alkenyl, halogeniertes lineares Alkyl, halogeniertes verzweigtes Alkyl, Aryl oder halogeniertes Aryl, vorzugsweise aber Methyl bedeuten, |

und

die Anzahl der Diorganosiloxy-Einheiten $n = a + b + c =$ 5 bis 100, vorzugsweise 20 bis 80, ist.

Alkyl ist in vorstehender Formel (2) beispielsweise $C_1$-$C_{20}$-Alkyl, Alkenyl ist in vorstehender Formel (2) beispielsweise $C_2$-$C_6$-Alkenyl; Aryl ist in vorstehender Formel (2) $C_6$-$C_{14}$-Aryl. Halogeniert bedeutet in vorstehender Formel teilweise oder vollständig chloriert, bromiert oder fluoriert.

Beispiele für Alkyl, Alkenyl, Aryl, halogeniertes Alkyl und halogeniertes Aryl sind Methyl, Ethyl, Propyl, n-Butyl, tert.-Butyl, Vinyl, Phenyl, Naphthyl, Chlormethyl, Perfluorbutyl, Perfluoroctyl und Chlorphenyl.

Derartige polydiorgariosiloxan-Polycarbonat-Blockcopolymere sind z.B. aus US-PS 3 189 662, US-PS 3 821 325 und US-PS 3 832 419 bekannt.

Bevorzugte Polydiorganosiloxan-Polycarbonat-Blockcopolymere werden hergestellt, indem man $\alpha,\omega$-Bishydroxyaryloxyendgruppen-haltige Polydiorganosiloxane zusammen mit anderen Diphenolen, gegebenenfalls unter Mitverwendung von Verzweigern in den üblichen Mengen, z.B. nach dem Zweiphasengrenzflächenverfahren (s. dazu H. Schnell, Chemistry and Physics of Polycarbonates Polymer Rev. Vol. IX, Seite 22 ff, Interscience Publishers New York 1964) umsetzt, wobei jeweils das Verhältnis der bifunktionellen phenolischen Reaktanten so gewählt wird, daß darauf der erfindungsgemäße Gehalt an aromatischen Carbonatstruktureinheiten und Diorganosiloxy-Einheiten resultiert.

Derartige $\alpha,\omega$-Bishydroxyaryloxyendgruppen-haltige Polydiorganosiloxane sind z.B. aus US 3 419 634 bekannt.

Weiterhin können bis zu 20 Gew.-Teilen Polyalkylenterephthalate durch kautschukelastische Polymerisate ersetzt werden.

Die kautschukelastischen Polymerisate umfassen Copolymerisate - insbesondere Pfropfcopolymerisate - mit kautschukelastischen Eigenschaften, die im wesentlichen aus mindestens 2 der folgenden Monomeren erhältlich sind:

Chloropren, Isopren, Isobuten, Styrol, Acrylnitril, Ethylen, Propylen, Vinylacetat und (Meth)-Arcylsäureester mit 1 bis 18 C-Atomen in der Alkoholkomponente; also Polymerisate wie sie, z.B. in "Methoden der organischen Chemie" (Houben-Weyl), Bd. 14/1, Georg-Thieme-Verlag, Stuttgart 1961, s. 393 bi 406 und in C.B. Bucknall, "Toughened Plastics", Appl. Science Publishers, London 1977, beschrieben sind. Die Polymerisate besitzen einen Gelgehalt von über 20, vorzugsweise über 40 Gew.-%. Die Glasübergangstemperatur (Tg) liegt unter -20 °C.

Bevorzugte Polymerisate sind selektiv hydrierte Blockcopolymerisate eines vinylaromatischen Monomeren (X) und eines konjugierten Diens (Y) von X-Y-Typ. Diese Blockcopolymerisate können nach bekannten Verfahren hergestellt werden.

Im allgemeinen kann für die Herstellung der geeigneten X-Y-Blockcopolymerisate aus Styrol, $\alpha$-Methylstyrol, Vinyltoluol usw. und aus konjugierten Dienen, wie Butadien, Isopren usw., die für die Herstellung von Styrol-Dien-Blockpolymerisaten verwendete Technologie benutzt werden, die in "Encyclopedia of Polymer Science and Technology", Bd. 15, Interscience, N.Y. (1971) auf den Seiten 508 ff beschrieben ist. Die selektive Hydrierung kann auf an sich bekannten Wegen durchgeführt werden und bedeutet, daß die ethylenischen Doppelbindungen im wesentlichen vollständig hydriert werden, wobei die aromatischen Doppelbindungen im wesentlichen unbeeinflußt bleiben.

Derartige selektiv hydrierte Blockcopolymerisate werden z.B. in der DE-OS 3 000 282 beschrieben.

Bevorzugte Polymerisate sind z.B. mit Styrol und/oder Acrylnitril und/oder (Meth)Acrylsäurealkylestern gepropfte Polybutadiene, Butadien/Styrol-Copolymerisate und Poly(meth)acrylsäureester, z.B. Copolymerisate aus Styrol oder Alkylstyrol und konjugierten Dienen (schlagfestes Polystyrol), d.h. Copolymerisate oder in der DE-OS 1 694 173 (= US-PS 3 564 077) beschriebenen Art, mit Acryl- oder Methacrylsäureestern, Vinylacetat, Acrylnitril, Styrol und/oder Alkylstyrolen gepfropfte Polybutadiene, Butadien/- Styrol- oder Butadien/Acrylnitril-Copolymerisate, Polyisobutene oder Polyisoprene, wie sie z.B. in der DE-OS 2 348 377 (= US-PS 3 919 353) bzw. in der DE-A 3 105 364 und DE-A 3 019 233 beschrieben sind.

Besonders bevorzugte Polymerisate sind z.B. ABS-Polymerisate (sowohl Mischals auch Pfropftypen), wie sie z.B. in der DE-OS 2 035 390 (= US-PS 3644 574) oder in der DE-OS 2 248 242 (= GB-PS 1 409 275) beschrieben sind. Beispielsweise genannt sind die folgenden Pfropfpolymerisate aus

C.1) 5 bis 95, vorzugsweise 30 bis 80, Gew.-Teile, einer Mischung aus

C.1.1) 50 bis 95 Gew.-Teilen Styrol, $\alpha$-Methylstyrol, halogen- oder methylkernsubstituiertem Styrol, $C_1$-$C_8$-Alkylmethacrylat, insbesondere Methylmethacrylat, $C_1$-$C_8$-Alkylacrylat, insbesondere Methacrylat, oder Mischungen dieser Verbindungen und

C.1.2) 5 bis 50 Gew.-Teilen Acrylnitril, Methacrylnitril $C_1$-$C_8$-Alkylmethacrylaten, insbesondere Methylmethacrylat, $C_1$-$C_8$-Alkylacrylat, insbesondere Methacrylat, Maleinsäureanhydrid, $C_1$-$C_4$-alkyl- bzw. phenyl-N-substituierte Maleinimide oder Mischungen dieser Verbindungen auf

C.2) 5 bis 95, vorzugsweise 20 bis 70, Gew.-Teilen Polymerisat, mit einer Glasübergangstemperatur unter -10 °C, insbesondere Polybutadien oder Butadien/Styrol-Copolymerisat.

Darüber hinaus sind besonders bevorzugte Polymerisate Pfropfpolymerisate, die durch Pfropfreaktion von

I. 10 bis 40, vorzugsweise 10 bis 35 Gew.-% bezogen auf Pfropfprodukt, mindestens eines (Meth)-Acrylsäureesters und/oder eines Gemisches aus 10 bis 40, vorzugsweise 20 bis 35 Gew.-%, bezogen auf Gemisch, Acrylnitril und 60 bis 90, vorzugsweise 65 bis 80 Gew.-%, bezogen auf Gemisch, Styrol auf

II. 60 bis 90, vorzugsweise 65 bis 90 Gew.-%, bezogen auf Pfropfprodukt, eines Butadien-Polymerisats mit mindestens 70 Gew.-%, bezogen auf II, Butadienresten als Pfropfgrundlage erhältlich sind,

wobei vorzugsweise der Gelanteil der Pfropfgrundlage II $\geqq$70 % (in Toluol gemessen), der Pfropfgrad G 0,15 bis 0,55 und der mittlere Teilchendurchmesser $d_{50}$ des Pfropfpolymerisats C 0,2 bis 0,6 $\mu$m, vorzugsweise 0,3 bis 0,5 $\mu$m betragen (vgl. z.B. EP 0 131 202).

(Meth)Acrylsäureester I sind Ester der Acrylsäure bzw. Methacrylsäure und einwertiger Alkohole mit 1 bis 8 C-Atomen.

Die Propfgrundlage II kann neben Butadienresten bis zu 30 Gew.-% bezogen auf II, Reste anderer ethylenisch ungesättigter Monomerer, wie z.B. Styrol, Acrylnitril, Ester der Acryl- oder Methacrylsäure mit 1 bis 4 C-Atomen in der Alkoholkomponente (wie Methylacrylat, Ethylacrylat, Methylmethacrylat, Ethylmethacrylat) enthalten. Die bevorzugte Pfropfgrundlage II besteht aus reinem Polybutadien.

Da bei der Pfropfreaktion die Pfropfmonomeren I bekanntlich nicht vollständig auf die Pfropfgrundlage II aufpfropfen, werden erfindungsgemäß unter Pfropfpolymerisaten auch solche Produkte verstanden, die neben den eigentlichen Pfropfpolymerisaten auch Homo- und Copolymerisate der eingesetzten Pfropfmonomeren I enthalten.

Der Pfropfgrad G bezeichnet das Gew.-Verhältnis von aufgepfropften Pfropfmonomeren zu Pfropfgrundlage und ist dimensionslos.

Die mittlere Teilchengröße $d_{50}$ ist der Durchmesser, oberhalb und unterhalb dessen jeweils 50 Gew.-% der Teilchen liegen. Er kann bestimmt werden mittels Ultrazentrifugen-Messungen (W. Scholtan, H. Lange, Kolloid, Z. und Z. Polymere 250 (1972), S. 782-796) oder mittels Elektronenmikroskopie und anschließende Teilchenauszahlung (C. Kämpf, H. Schuster, Angew. Makromolekulare Chemie 14, (1970), S. 111-129) oder mittels Lichtstreuungsmessungen.

Besonders bevorzugte kautschukelastische Polymerisate sind z.B. auch Pfropfpolymerisate aus

a) 25 bis 98 Gew.-%, bezogen auf 100 Gew.-% Pfropfpolymerisat, Acrylatkautschuk mit einer Glasübergangstemperatur unter -20 °C als Pfropfgrundlage und

b) 2 bis 75 Gew.-%, bezogen auf 100 Gew.-% Pfropfpolymerisat, mindestens eines polymerisierbaren, ethylenisch ungesättigten Monomeren, dessen bzw. deren in Abwesenheit von (a) entstandenen Homo- bzw. Copolymerisate eine Glasübergangstemperatur von 25 °C hätten, als Pfropfmonomere.

Die Acrylatkautschuke (a) sind vorzugsweise Polymerisate aus Acrylsäurealkylestern, gegebenenfalls mit bis zu 40 Gew.-% anderer polymerisierbarer, ethylenisch ungesättigter Monomerer. Sofern die als Pfropfgrundlage (a) eingesetzten Acrylatkautschuke - wie nachfolgend beschrieben - ihrerseits bereits Pfropfprodukte mit einem Dienkautschukkern sind, wird zur Berechnung dieser Prozentangabe der Dienkautschukkern nicht mitgezählt. Zu den bevorzugten polymerisierbaren Acrylsäureestern gehören $C_1$-$C_8$-Alkylester, beispielsweise Methyl-, Ethyl-, Butyl, Octyl- und 2-Ethylhexylester; Halogenalkylester, vorzugsweise Halogen-$C_1$-$C_8$-alkylester, wie Chlorethylacrylat und aromatische Ester wie Benzylacrylat und Phenethylacrylat. Sie können einzeln oder in Mischung eingesetzt werden.

Die Acrylatkautschuke (a) können unvernetzt oder vernetzt, vorzugsweise partiell vernetzt sein.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen oder gesättigter Polyole mit 2 bis 4 OH-Gruppen und 2 bis 20 C-Atomen, wie z.b. Ethylenglykoldimethacrylat, Allylmethacrylat, mehrfach ungesättigte heterocyclische Verbindungen, wie z.B. Trivinyl- und Triallylcyanurat und -isocyanurat, Tris-acryloyl-s-triazine, insbesondere Triallylcyanurat; polyfünktionelle Vinylverbindungen wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Trivinylcyanurat, Triacryloylhexahydro-s-triazin, Triallylbenzole.

Die Menge der vernetzenden Monomeren beträgt vorzugsweise 0,02 bis 5, insbesondere 0,05 bis 2 Gew.-%, bezogen auf Pfropfgrundlage (a).

Bei cyclischen vernetzenden Monomeren mit mindestens 3 ethylenisch ungesättigten Gruppen ist es vorteilhaft, die Menge auf $<1$ Gew.-% der Pfropfgrundlage (a) zu beschränken.

Bevorzugte "andere polymerisierbare, ethylenisch ungesättigte Monomere, die neben den Acrylsäureestern gegebenenfalls zur Herstellung der Pfropfgrundlage (a) dienen können, sind z.B. Acrylnitril, Styrol, $\alpha$-Methylstyrol, Acrylamide, Vinyl-$C_1$-$C_6$-alkylether. Bevorzugte Acrylkautschuke als Pfropfgrundlage (a) sind Emulsionspolymerisate, die einen Gelgehalt von $\geq 60$ Gew.-% aufweisen.

Der Gelgehalt der Pfropfgrundlage (a) wird bei 25 °C in Dimethylformamid bestimmt (M. Hoffmann, H. Krämer, R. Kuhn, Polymeranalytik I und II, Georg-Thieme-Verlag, Stuttgart 1977).

Acrylatkautschuke als Pfropfgrundlage (a) können auch Produkte die einen vernetzten Dienkautschuk aus einem oder mehreren konjugierten Dienen, wie Polybutadien, oder ein Copolymerisat eines konjugierten Diens mit einem ethylenisch ungesättigten Monomer, wie Styrol und/oder Acrylnitril, als Kern enthalten.

Der Anteil des Polydien-Kerns in der Pfropfgrundlage (a) kann 0,1 bis 80, bevorzugt 10 bis 50 Gew.-%, bezogen auf (a), betragen. Schale und Kern können unabhängig voneinander unvernetzt, teilvernetzt oder hochvernetzt sein.

Von den zuvor erwähnten Acrylat-Pfropfpolymerisate sind besonders bevorzugt diejenigen aus Polybutadien als Pfropfgrundlage und (Meth)Acrylsäureester und Acrylnitril als Pfropfauflage, wobei die Pfropfgrundlage aus 65 bis 90 Gew.-% Teilen vernetztem Polybutadien mit einem Gelgehalt von über 70 % (in Toluol) und die Pfropfauflage aus einem 5:1 bis 20:1 Gemisch aus Methylmethacrylat und n-butylacrylat bestehen (z.B. DE 3 105 364, DE 3 019 233).

Bis zu 6 Gew.-Teile Polyalkylenterephthalat können durch Polyolefine ersetzt werden. Falls die Mischung Polyolefine enthält, werden vorzugsweise 2 bis 6 Gew.-Teile zugesetzt. Polyolefine sind Polyethylen, Polypropylen, Poly-1-buten und Polymethylpenten, die noch geringe Mengen nicht konjugierter Diene einpolymerisiert enthalten können. Diese Polymerisate sind bekannt und in Roempp's Chemielexikon, 8. Auflage 1987, Bd. 5, Seite 3307 und in der dort zitierten Literatur beschrieben. Bevorzugt ist Polypropylen.

## Komponente B

Als Calciumsulfat können natürlich vorkommende oder synthetisch hergestellte Produkte eingesetzt werden, z.B. Gips. Bei Gips ($CaSO_4 \cdot 2H_2O$) handelt es sich um ein bekanntens Mineral, das natürlich vorkommt und welches z.B. bei der Rauchgasentschwefelung anfällt. Das Halbhydrat $CaSO_4 \cdot 1/2\ H_2O$ und das wasserfreie Calciumsulfat können z.B. durch Erhitzen von Gips erhalten werden.

## Komponente C

Als Füllstoffe und Verstärkungsstoffe können Glasfasern, Glaskugeln, Glimmer, Silikate, Quarz, Talkum, Titandioxid, Wollastonit, u.a. eingesetzt werden, die auch oberflächenbehandelt sein können. Bevorzugte Verstärkungsstoffe sind handelsübliche Glasfasern. Die Glasfasern, die im allgemeinen einen Faserdurchmesser zwischen 8 und 14 µm haben, können als Endlosfasern oder als geschnittene oder gemahlene Glasfasern eingesetzt werden, wobei die Fasern mit einem geeigneten Schlichtesystem und einem Haftvermittler bzw. Haftvermittlersystem auf Silanbasis ausgerüstet sein können. Vorzugsweise werden der Mischung 10 bis 40, insbesondere 20 bis 35 Gew.-Teile Füll- und Verstärkungsstoffe zugesetzt. Füll- und Verstarkungsstoffe enthaltende Formmassen enthalten vorzugsweise 40 bis 89, insbesondere 40 bis 70 Gew.-Teile Polyalkylenterephthalat.

Die erfindungsgemäßen Formmassen können weiterhin bis zu 18, vorzugsweise 3 bis 15, insbesondere 8 bis 15 Gew.-Teile halogenierte Verbindungen und bis zu 8, vorzugsweise 2 bis 6 Gew.-Teile Antimonverbindungen, insbesondere Antimontrioxid oder Antimonpentoxid enthalten.

Als halogenhaltige, insbesondere bromierte, organische Verbindungen seien beispielhaft genannt:
Ethylen-1,2-bistetrabromphthalimid,
Expoxidiertes Tetrabrombisphenol A-Harz,
Tetrabrombisphenol-A-oligocarbonat,
Pentabrompolyacrylat,
bromiertes Polystyrol.

Pentabrompolyacrylat hat im allgemeinen mittlere Molekulargewichte $\overline{M}_w$ (Gewichtsmittel) von 10.000 bis 200.000, bromiertes Polystyrol im allgemeinen 10.000 bis 500.000.

Bevorzugt werden epoxidiertes Tetrabrombisphenol-A und Tetrabrombisphenol-A-Oligocarbonat verwendet.

Expoxidiertes Tetrabrombisphenol-A ist ein bekanntes Diepoxidharz mit einem Molekulargewicht von etwa 350 bis etwa 2.100, vorzugsweise 360 bis 1.000, besonders bevorzugt 370 bis 400, und besteht im wesentlichen aus mindestens einem Kondensationsprodukt von Bisphenol A und Epihalogenhydrin und wird beschrieben durch die Formel (I)

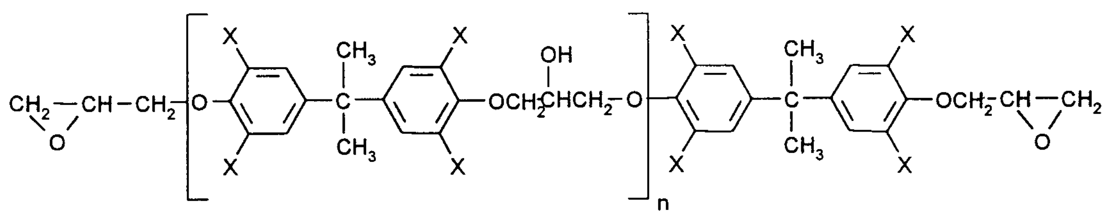

worin X Wasserstoff oder Brom darstellt und n eine Durchschnittszahl zwischen Null und weniger als 2,3 ist (vgl. z.B. EP-A 180 471).

Tetrabrombisphenol-A-oligocarbnat ist beschrieben durch die Formel (II), wobei die Oligomere entweder mit Phenol oder mit Tribromphenol terminiert werden:

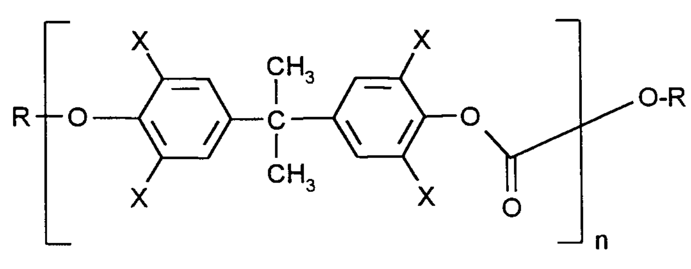

(II)

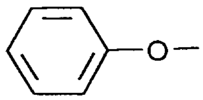

R = oder

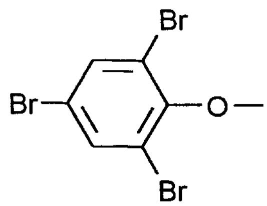

worin X Wasserstoff oder Brom darstellt, n ist eine Durchschnittszahl zwischen 4 und 7.

Tetrabrombisphenol-A-oligocarbonat ist bekannt und nach bekannten Verfahren herstellbar.

Die erfindungsgemäßen Formmassen können übliche Additive, wie Gleit- und Entformungsmittel, Nukleierungsmittel, Antistatika, Stabilisatoren sowie Farbstoffe und Pigmente enthalten.

Die erfindungsgemäßen Formmassen, bestehend aus den Komponenten A bis C und gegebenenfalls weiteren bekannten Zusätzen wie Stabilisatoren, Farbstoffen, Pigmenten, Gleit- und Entformungsmitteln, Verstärkungsstoffen, Nukleierungsmittel sowie Antistatika, werden hergestellt, indem man die jeweiligen Bestandteile in bekannter Weise vermischt und bei Temperaturen von 230 °C bis 330 °C in üblichen Aggregaten wie Innenknetern, Extrudern, Doppelwellenschnecken schmelzcompoundiert oder schmelzextrudiert.

Gegenstand der vorliegenden Erfindung ist somit auch ein Verfahren zur Herstellung von thermoplastischen Formmassen, bestehend aus den Komponenten A bis C und gegebenenfalls weiteren bekannten Zusätzen wie Stabilisatoren, Farbstoffen, Pigmenten, Gleit- und Entformungsmitteln, Verstärkungsstoffen, Nukleierungsmittel sowie Antistatika, das dadurch gekennzeichnet ist, daß man die Komponenten A bis C sowie gegebenenfalls Stabilisatoren, Farbstoffen, Pigmenten, Gleit- und Entformungsmitteln, Verstärkungsstoffen, Nukleierungsmittel und/oder Antistatika nach erfolgter Vermischung bei Temperaturen von 230 °C bis 330 °C in gebräuchlichen Aggregaten schmelzcompoundiert oder schmelzextrudiert.

Ein weiterer Gegenstand der Erfindung ist die Verwendung der o.g. Formmassen zur Herstellung von Formkörpern.

Die Formmassen können zur Herstellung von Formkörpern jeder Art verwendet werden. Insbesondere können Formkörper durch Spritzguß hergestellt werden. Beispiele für herstellbare Formkörper sind: Gehäuse jeder Art, z.B. für Haushaltsgeräte, Steckerleisten und Leuchtensockel sowie Teile aus dem Kraftfahrzeugsektor.

## Beispiele

Die folgenden Komponenten werden in den Beispielen verwendet:

A) Polybutylenterephthalat mit einer Intrinsic Viscosity von 0,925 ± 0,025 entsprechend einer relativen Lösungsviskosität von 1,521 ± 0,016, gemessen in einer 0,5 %igen Lösung aus Phenol und o-Dichlorbenzol (Mischungsverhältnis 1:1 Gewichtsteile).

B) Gips ($CaSO_4 \cdot 2H_2O$)

C) Glasfasern: Owens Corning Typ OC29R

D) Tetrabrombisphenol-Oligocarbonat (Great Lakes Chemicals)

E) bromiertes Polystyrol (Pyro-Chek® 68PB Ferro Corp.)

F) Pentabrombenzylpolyacrylat (Eurobrom B.V.)

G) Polypropylen: Novolen 1100 L (Hoechst AG)

H) Antimontrioxid

**Vergleichsbeispiel 1**

79,4 Gew.-% Polybutylenterephthalat (PBT),
20,0 Gew.-% Glasfasern
0,6 Gew.-% Additive

**Vergleichsbeispiel 2**

59,4 Gew.-% Polyubtylenterephthalat (PPT),
20,0 Gew.-% Gips
20,0 Gew.-% Glasfasern
0,6 Gew.-% Additive

**Vergleichsbeispiel 3**

64,9 Gew.-% Polybutylenterephthalat (PBT),
20,0 Gew.-% Glasfasern
10,0 Gew.-% Tetrabrombisphenol A-Oligocarbonat
4,5 Gew.-% Antimontrioxid
0,6 Gew.-% Additive

**Vergleichsbeispiel 4**

44,9 Gew.-% Polybutylenterephthalat (PBT),
20,0 Gew.-% Glasfasern
20,0 Gew.-% Gips
10,0 Gew.-% Tetrabrombisphenol A-Oligocarbonat
4,5 Gew.-% Antimontrioxid
0,6 Gew.-% Additive

**Vergleichsbeispiel 5**

54,9 Gew.-% Polybutylenterephthalat (PBT),
30,0 Gew.-% Glasfasern
10,0 Gew.-% bromiertes Polystyrol
4,5 Gew.-% Antimontrioxid
0,6 Gew.-% Additive

**Beispiel 1** (erfindungsgemäß)

50,9 Gew.-% Polybutylenterephthalat (PBT),
30,0 Gew.-% Glasfasern
10,0 Gew.-% bromiertes Polystyrol
4,5 Gew.-% Antimontrioxid
4,0 Gew.-% Gips
0,6 Gew.-% Additive

**Vergleichsbeispiel 6**

56,9 Gew.-% Polybutylenterephthalat (PBT),
30,0 Gew.-% Glasfasern
8,0 Gew.-% Pentabrombenzylpolyacrylat
4,5 Gew.-% Antimontrioxid
0,6 Gew.-% Additive

**Beispiel 2** (erfindungsgemäß)

52,9 Gew.-% Polybutylenterephthalat (PBT),
30,0 Gew.-% Glasfasern
8,0 Gew.-% Pentabrombenzylpolyacrylat
4,5 Gew.-% Antimontrioxid
4,0 Gew.-% Gips
0,6 Gew.-% Additive

**Vergleichsbeispiel 7**

50,9 Gew.-% Polybutylenterephthalat (PBT),
30,0 Gew.-% Glasfasern
10,0 Gew.-% bromiertes Polystyrol
4,5 Gew.-% Antimontrioxid
4,0 Gew.-% Polypropylen Novolen 1100 L (Hoechst AG)
0,6 Gew.-% Additive

**Beispiel 3** (erfindungsgemäß)

46,9 Gew.-% Polybutylenterephthalat (PBT),
30,0 Gew.-% Glasfasern
10,0 Gew.-% bromiertes Polystyrol
4,5 Gew.-% Antimontrioxid
4,0 Gew.-% Polypropylen Novolen 1100 L (Hoechst AG)
4,0 Gew.-% Gips
0,6 Gew.-% Additive

**Vergleichsbeispiel 8**

52,9 Gew.-% Polybutylenterephthalat (PBT),
30,0 Gew.-% Glasfasern
8,0 Gew.-% Pentabrombenzylpolyacrylat
4,5 Gew.-% Antimontrioxid
4,0 Gew.-% Polypropylen Novolen 1100 l (Hoechst AG)
0,6 Gew.-% Additive

**Beispiel 4** (erfindungsgemäß)

48,9 Gew.-% Polybutylenterephthalat (PBT),
30,0 Gew.-% Glasfasern
8,0 Gew.-% Pentabrombenzylpolyacrylat
4,5 Gew.-% Antimontrioxid
4,0 Gew.-% Polypropylen Novolen 1100 L (Hoechst AG)
4,0 Gew.-% Gips
0,6 Gew.-% Additive.

Die folgenden Tests wurden durchgeführt:

1. Randfaserdehnung in % bei Höchstkraft aus dem Biegeversuch, 5 mm/min, ISO 178, DIN 53452, Stab 80 x 10 x 4 mm
2. Biegespanung [N/$mm^2$] bei Höchstkraft, 5 mm/min, DIN 53452, Stab 80 x 10 x 4 mm
3. E-Modul [N/$mm^2$] (3-Punkt-Biegeversuch), 2 mm/min, DIN 53457-B3, Stab 80 x 10 x 4 mm
4. Brennbarkeit, UL 94 (IEC 707), 12,7 x 12,7 x 1,6 mm
5. Kriechstromfestigkeit [Stufe], CTI, Lösung A, IEC 112/VDE 0303/1, Stab 120 x 15 x 4 mm

Tabelle

| Ergebnisse | Vergl. Bsp. 1 | Vergl. Bsp. 2 | Vergl. Bsp. 3 | Vergl. Bsp. 4 | Vergl. Bsp. 5 | Bsp. 1 | Vergl. Bsp. 6 | Bsp. 2 | Vergl. Bsp. 7 | Bsp. 3 | Vergl. Bsp. 8 | Bsp. 4 |
|---|---|---|---|---|---|---|---|---|---|---|---|---|
| Randfaser-dehnung [%] | 4,0 | 3,3 | 3,2 | 2,3 | 2,4 | 2,1 | 2,5 | 2,4 | 2,4 | 2,2 | 2,6 | 2,4 |
| Biege-festigkeit [$N/mm^2$] | 190 | 200 | 185 | 186 | 216 | 195 | 217 | 210 | 205 | 189 | 208 | 196 |
| E-Modul [$N/mm^2$] | 6000 | 8500 | 6500 | 9830 | 10700 | 10700 | 10200 | 10500 | 10200 | 10500 | 9930 | 10000 |
| UL 94 | HB | HB | VO | VO | VO | VO | VO | VO | VO | VO | VO | VO |
| Nach-brennzeit [s] | - | - | - | - | 16 | 4 | 33 | 1 | 34 | 7 | 50 | 4 |
| Kriech-strom-festigkeit [Stufe] | 350 | 600 | 200 | 325 | 275 | 275 | 225 | 300 | 325 | 400 | 300 | 350 |

Alle Beispiele, die nicht als Vergleich deklariert sind, sind erfindungsgemäße Beispiele

## Patentansprüche

**1.** Thermoplastische Formmassen, enthaltend

A) 30 bis 99,5 Gew.-Teile Polyalkylenterephthalat,

B) 0,5 bis 4,5 Gew.-Teile Calciumsulfat
C) 0 bis 40 Gew.-Teile Füll- und Verstärkungsstoffe, verschieden von Komponente B, und gegebenenfalls
D) eine Flammschutzmittelkombination aus
D.1) 0 bis 18 Gew.-Teile halogenhaltige Flammschutzmittel und
D.2) 0 bis 8 Gew.-Teile Antimonverbindungen,

wobei jeweils gegebenenfalls bis zu 20 Gew.-Teile Polyalkylenterephthalat durch aromatisches Polycarbonat und/oder kautschukelastisches Polymerisat mit einer Glasübergangstemperatur von < -10 °C und/oder bis zu 6 Gew.-Teile Polypropylen ersetzt werden kann.

**2.** Thermoplastische Formmassen gemäß Anspruch 1, enthaltend
A) 30 bis 95,5 Gew.-Teile Polyalkylenterephthalat,
B) 1 bis 4 Gew.-Teile Calciumsulfat und
C) 0 bis 40 Gew.-Teile Füll- und Verstärkungsstoffe, verschieden von Komponente B, und gegebenenfalls
D) eine Flammschutzmittelkombination aus
D.1) 1 bis 18 Gew.-Teile halogenhaltige Flammschutzmittel und
D.2) 1 bis 8 Gew.-Teile Antimonverbindungen.

**3.** Thermoplastische Formmasse gemäß Anspruch 1 und 2, wobei Komponente D.1 ausgewählt ist aus Ethylen-1,2-bistetra-bromphthalimid, epoxidiertes Tetrabrombisphenol A Harz, Tetrabrombisphenol A-oligocarbonat, Pentabrompolyacrylat und bromiertem Polystyrol.

**4.** Verwendung der thermoplastischen Formmassen gemäß Anspruch 1 zur Herstellung von Formkörpern.

**5.** Formkörper, hergestellt aus thermoplastischen Formmassen gemäß Anspruch 1.

Europäisches Patentamt

# EUROPÄISCHER RECHERCHENBERICHT

Nummer der Anmeldung
EP 95 10 7792

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | DATABASE WPI<br>Section Ch, Week 9343<br>Derwent Publications Ltd., London, GB;<br>Class A13, AN 93-339845<br>& JP-A-05 247 239 ( TEIJIN LTD.) ,<br>24.September 1993<br>* Zusammenfassung *<br>--- | 1-5 | C08K3/30<br>C08K13/02<br>C08L67/02<br>//(C08K13/02,<br>3:30,3:22,<br>5:00) |
| X | CHEMICAL ABSTRACTS, vol. 109, no. 10,<br>5.September 1988<br>Columbus, Ohio, US;<br>abstract no. 74655,<br>* Zusammenfassung *<br>& JP-A-63 020 353 (MATSUSHITA ELECTRIC WORKS, LTD.) 21.Januar 1988<br>--- | 1,4,5 | |
| D,X | US-A-4 284 550 (MIZUNO SHIOJI ET AL)<br>18.August 1981<br>* Spalte 2, Zeile 31 - Zeile 34; Ansprüche; Beispiele *<br>--- | 1-5 | |
| | | | RECHERCHIERTE SACHGEBIETE (Int.Cl.6) |
| D,X | FR-A-2 312 541 (BASF AG) 24.Dezember 1976<br>* Seite 2, Zeile 28 - Zeile 34; Ansprüche; Beispiele *<br>----- | 1-5 | C08K<br>C08L |

Der vorliegende Recherchenbericht wurde für alle Patentansprüche erstellt

| Recherchenort | Abschlußdatum der Recherche | Prüfer |
|---|---|---|
| DEN HAAG | 12.September 1995 | DE LOS ARCOS, E |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument